# EUROPEAN PATENT SPECIFICATION

(11) **EP 2 798 261 B1**
(45) Date of publication and mention of the grant of the patent: **02.01.2019**
(21) Application number: 12775214.5
(22) Date of filing: 11.10.2012
(51) Int. Cl.: F16L 59/065, B32B 5/16, B32B 5/18

(54) **A VACUUM INSULATION PANEL**
VAKUUMDÄMMPLATTE
PANNEAU ISOLANT SOUS VIDE

(30) Priority: 14.10.2011 TR 201110235
(43) Date of publication of application: 05.11.2014
(73) Proprietor: Arçelik Anonim Sirketi, 34950 Istanbul (TR)
(72) Inventor: ERSOY, Osman Gokhan, 34950 Istanbul (TR); YUSUFOGLU, Yusuf, 34950 Istanbul (TR)
(86) International application number: PCT/EP2012/070125
(87) International publication number: WO 2013/053799

(56) References cited:
- EP-A1- 2 228 127
- EP-A2- 0 315 453
- EP-A2- 0 737 833
- WO-A1-01/78925
- US-A- 4 681 788

## Description

The present invention relates to a vacuum insulation panel.

Vacuum insulation panels are used in various fields in our day since they have better performance with respect to the conventional insulation materials and since they provide better thermal resistance by using the insulating feature of the vacuum. Basically, a vacuum insulation panel is produced by putting a core material into a membrane (outer protective envelope) exclusively or with getter according to the characteristic of the core material, vacuuming and closing it leak-proofingly. In the vacuum insulation panels, in order to obtain the vacuum effect, the gas pressure is provided to be decreased by reducing the number of gas molecules in the environment. For this reason, the core materials used have to be in an interconnected open-porous structure. As core material, materials such as precipitated silica, fumed silica, aerogel, glass fiber, extruded open-cell polystrene or open-cell polyurethane, etc. are used. Among these materials, silica is the widely preferred material due to its low thermal conductivity coefficient. However, high production costs of the silica is the most important factor that prevents the wide-use of vacuum insulation panels. There are various state of the art embodiments for decreasing the production costs of the core material used in the vacuum insulation panels.

In the state of the art United States Patent Document US4681788, the mixture of precipitated silica and fly ash in different ratios is used as the core material. A core material with low thermal conductivity is obtained due to the high amount of silica in the fly ash.

In another state of the art European Patent Application EP 0 737 833 A2, a vacuum insulation panel is disclosed, wherein the core material is selected from the group consisting of an open cell foamed plastic, an inorganic fine powder such as silica fine powder, a molded plate having multipore and fibrous substance.

In another state of the art United States Patent Document No. US7838098, a vacuum insulation panel is disclosed, wherein the production costs are decreased by using quicklime and zeolite as the getter, wherein the total thickness of material is decreased by keeping the average fiber diameter of the core material between 1.5 µm and 9 µm and wherein the insulation efficiency is increased.

In another state of the art United States Patent Document No. US20030157284, a core material is disclosed, obtained from a composition of silica oxide, aluminum oxide and magnesium oxide for the vacuum insulation panels used in household appliances.

The aim of the present invention is the realization of a vacuum insulation panel of which the insulation effectiveness is increased.

The vacuum insulation panel realized in order to attain the aim of the present invention, explicated in the first claim and the respective claims thereof comprises an open-porous core material obtained by coating inorganic materials with a polymer having hydrophilic and hydrophobic blocks by forming micelle structures in aqueous solutions and then by removing polymer from over the inorganic materials.

For the production of the core material used in the vacuum insulation panel of the present invention, a polymer is selected, having hydrophobic and hydrophilic blocks of which the aqueous solution has the feature of forming a micelle.

In an embodiment of the present invention, inorganic materials are added into the aqueous solution of the polymer, of which the aqueous solution has the feature of forming micelle so that the ratio by weight of the polymer to the inorganic material is between 5% to 50%, and the temperature of the solution is provided to be between 2 °C and 30 °C. Thus, the polymer is provided to hold onto the inorganic materials by forming micelle structures.

After the polymer finishes adsorbing on the inorganic materials, the polymer is removed from over the coating with one of the methods like polymer calcination or solvent extraction. Thus, a core material is obtained, comprising interconnected open-porous inorganic materials. The vacuum insulation panel is prepared by placing the said open-porous core material into a barrier together with a getter with suitable chemical structure. Thus, a vacuum insulation panel is obtained, with low thermal conductivity, hence with increased insulation effectiveness.

In another embodiment of the vacuum insulation panel of the present invention, the selected polymer comprises at least one negatively-charged functional group. Thus, the polymer is charged negatively, and an electrostatic interaction between the negatively-charged polymer and the positively-charged inorganic material is provided. Consequently, the adsorbing capacity of the polymer on the inorganic material is increased.

In another embodiment of the vacuum insulation panel of the present invention, the selected polymer comprises at least one positively-charged functional group. Thus, the polymer is charged positively, and an electrostatic interaction between the positively-charged polymer and the negatively-charged inorganic material is provided. Consequently, the adsorbing capacity of the polymer on the inorganic material is increased.

In another embodiment of the vacuum insulation panel of the present invention, a triblock polymer comprising a hydroxyl (OH⁻) functional group having hydrophobic and hydrophilic blocks, of which the aqueous solution has the feature of forming micelle is used for the production of the core material.

In another embodiment of the vacuum insulation panel of the present invention, a pentablock polymer comprising a sulpho (SO3⁻) functional group having hydrophobic and hydrophilic blocks, of which the aqueous solution has the feature of forming micelle is used for the production of the core material.

In another embodiment of the vacuum insulation panel of the present invention, a pentablock polymer comprising a carboxyl (COOH⁻) functional group having hydrophobic and hydrophilic blocks, of which the aqueous solution has the feature of forming micelle is used for the production of the core material.

In another embodiment of the vacuum insulation panel of the present invention, the inorganic material is selected from silica-based inorganic materials. The said silica-based inorganic materials are selected from aluminum silica, sodium silica, precipitated silica, fumed silica or a mixture of all these materials. Thus, a vacuum insulation panel having a core material with low thermal conductivity and hence increased insulation feature is obtained.

A vacuum insulation panel realized in order to attain the aim of the present invention is illustrated in the attached figures, where:

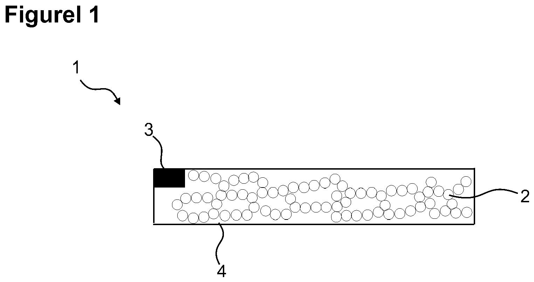

Figure 1 - is the schematic view of a vacuum-insulation panel of the present invention.

The elements illustrated in the figures are numbered as follows:
1. Vacuum insulation panel
2. Core material
3. Getter
4. Barrier

The vacuum insulation panel (1) of the present invention comprises a porous core material (2), a getter (3) suitable for the chemical structure of the core material (2) and a barrier (4) holding the core material (2) and the getter (3) together.

The core material (2) of the present invention is open-porous, obtained by adding inorganic materials into the aqueous solution of a polymer, of which the aqueous solution comprising hydrophilic and hydrophobic blocks has the feature of forming micelle, by the polymer coating over the added inorganic material by forming micelle structures and then by removing polymer from over the surface of the inorganic materials after the coating.

In the vacuum insulation panel (1) of the present invention, according to the micellisation principle, over the critical micelle concentration and the critical micelle temperature, while the hydrophobic blocks of the polymer have a tendency to move away from the water, the hydrophilic blocks attracted to water move towards the water in contrary to the hydrophobic blocks. Thus, the micelle structures are formed in the aqueous solution of the polymer. When inorganic compounds are added to the aqueous solutions of the polymer comprising the hydrophobic and hydrophilic blocks having the feature of forming micelle structures, the polymer forms micelle structures on the inorganic material and the surface of the inorganic material is provided to be coated. After the process of coating the polymer over the inorganic compounds is completed, the polymer is removed with the calcination method or the solvent extraction method by using acid, water and organic dissolvents. After the polymer is removed from over the inorganic materials, a core material (2) comprising the open-porous inorganic material is obtained. The said open-porous core material (2) is filled in a barrier (4) together with a proper getter (3) and thus the vacuum insulation panel (1) is prepared. Thus, the vacuum insulation panel (1) with low thermal conductivity and hence increased insulation effectiveness is obtained, that comprises the core material (2) having an interconnected open-porous structure.

In an embodiment of the vacuum insulation panel (1) of the present invention, when the inorganic material is added to the aqueous solution of the polymer, the ratio by weight of the polymer to the inorganic material in the solution is selected between 5% and 50%. Thus, the vacuum insulation panel (1) comprising the core material (2) having the desired dimension and pore structure is obtained.

In another embodiment of the vacuum insulation panel (1) of the present invention, when the inorganic material is added to the aqueous solution of the polymer, the temperature of the solution is adjusted to between 2 °C and 30 °C. Thus, the diameters of the micelle structures formed in the aqueous solution of the polymer are provided to be dimensioned as desired, and the surfaces of the inorganic compounds are provided to be coated with polymer with desired thickness.

In another embodiment of the vacuum insulation panel (1) of the present invention, the polymer used, with the feature of forming micelle comprises at least one negatively-charged functional group. Thus, the polymer carries negative charge and goes in to an electrostatic interaction with the positively-charged inorganic material. Thus, the negatively-charged polymer is more effectively coated over the surface of the positively-charged inorganic material.

In another embodiment of the vacuum insulation panel (1) of the present invention, the polymer used, with the feature of forming micelle comprises at least one positively-charged functional group. Thus, the polymer carries positive charge and goes into an electrostatic interaction with the negatively-charged inorganic material. Thus, the positively-charged polymer is more effectively coated over the surface of the negatively-charged inorganic material.

In another embodiment of the vacuum insulation panel (1) of the present invention, the polymer is selected from triblock polymers comprising hydroxyl (OH⁻) functional group having hydrophobic and hydrophilic blocks, of which the aqueous solution has the feature of forming micelle. Pluronric F127 can be given as an example of the said polymer.

In another embodiment of the vacuum insulation panel (1) of the present invention, the polymer is selected from pentablock polymers comprising sulpho (SO₃⁻) functional group having hydrophobic and hydrophilic blocks, of which the aqueous solution has the feature of forming micelle. PentaPZ can be given as an example of this polymer.

In another embodiment of the vacuum insulation panel (1) of the present invention, the polymer is selected from pentablock polymers comprising carboxyl (COOH⁻) functional group having hydrophobic and hydrophilic blocks, of which the aqueous solution has the feature of forming micelle. PentaPAA can be given as an example of the said polymer.

In another embodiment of the vacuum insulation panel (1) of the present invention, the inorganic materials are selected from silica-based inorganic materials. The said silica-based inorganic materials are selected from aluminum silica, sodium silica, precipitated silica, fumed silica or the composition of all these materials. Thus, a vacuum insulation panel (1) having a core material (2) with low thermal conductivity and hence increased insulation feature is obtained.

It is to be understood that the present invention is not limited to the embodiments disclosed above and a person skilled in the art can easily introduce different embodiments. These should be considered within the scope of the protection postulated by the claims of the present invention.

## Claims

1. A vacuum insulation panel (1) comprising a porous core material (2), a getter (3) suitable for the chemical structure of the core material (2) and a barrier (4) holding the core material (2) and the getter (3) together,
**characterized in that** the open-porous core material (2) is obtained by:
- adding inorganic materials into the aqueous solution of a polymer comprising hydrophilic and hydrophobic blocks, of which the aqueous solution has the feature of forming micelle,
- coating the polymer over the added inorganic material by forming micelle structures,
- removing polymer from the surface of the inorganic material after the coating,
further **characterized in that** the vacuum insulation panel is obtained by vacuuming and closing the vacuum insulation panel in a leak proof manner.

2. A vacuum insulation panel (1) as in Claim 1, **characterized in that** the ratio by weight of the polymer to the inorganic material is between 5% and 50%.

3. A vacuum insulation panel (1) as in Claim 1 or 2, **characterized in that** the temperature of the solution is between 2°C and 30°C after the inorganic material is added to the aqueous solution of the polymer.

4. A vacuum insulation panel (1) as in any one of the claims 1 to 3, **characterized by** the polymer comprising at least one negatively-charged functional group.

5. A vacuum insulation panel (1) as in any one of the claims 1 to 3, **characterized by** the polymer comprising at least one positively-charged functional group.

6. A vacuum insulation panel (1) as in any one of the Claims 4 or 5, **characterized in that** the polymer is a triblock polymer comprising hydroxyl (OH⁻) functional group having hydrophobic and hydrophilic blocks, of which the aqueous solution has the feature of forming micelle.

7. A vacuum insulation panel (1) as in any one of the Claims 4 or 5, **characterized in that** the polymer is a pentablock polymer comprising sulpho (S0₃⁻) functional group having hydrophobic and hydrophilic blocks, of which the aqueous solution has the feature of forming micelle.

8. A vacuum insulation panel (1) as in any one of the Claims 4 or 5, **characterized in that** the polymer is a pentablock polymer comprising carboxyl (COOH⁻) functional group having hydrophobic and hydrophilic blocks, of which the aqueous solution has the feature of forming micelle.

9. A vacuum insulation panel (1) as in any one of the above claims, **characterized in that** the inorganic materials are silica-based inorganic materials.

10. A vacuum insulation panel (1) as in Claim 9, **characterized in that** the inorganic materials are aluminum silica, sodium silica, precipitated silica, fumed silica or a mixture of all these materials.

## Patentansprüche

1. Vakuumisolierplatte (1), umfassend ein poröses Kernmaterial (2), einen Getter (3), der für die chemische Struktur des Kernmaterials (2) geeignet ist, und eine Barriere (4), die das Kernmaterial (2) und den Getter (3) zusammenhält,
**dadurch gekennzeichnet, dass** das offenporige Kernmaterial (2) erhalten wird durch:
- Zugabe anorganischer Materialien in die wässrige Lösung eines Polymers, das hydrophile und hydrophobe Blöcke umfasst, von denen die wässrige Lösung die Eigenschaft hat, Micellen zu bilden,
- Beschichten des Polymers über dem zugegebenen anorganischen Material unter Bildung von Mizellstrukturen,
- Entfernen von Polymer von der Oberfläche des anorganischen Materials nach der Beschichtung, ferner **dadurch gekennzeichnet, dass** die Vakuumisolierplatte durch Vakuumieren und Schließen der Vakuumisolierplatte in einer auslaufsicheren Weise erhalten wird.

2. Vakuumisolierplatte (1) nach Anspruch 1, **dadurch gekennzeichnet, dass** das Gewichtsverhältnis des Polymers zu dem anorganischen Material zwischen 5% und 50% liegt.

3. Vakuumisolierplatte (1) nach Anspruch 1 oder 2, **dadurch gekennzeichnet, dass** die Temperatur der Lösung zwischen 2°C und 30°C liegt, nachdem das anorganische Material der wässrigen Lösung des Polymers zugegeben wurde.

4. Vakuumisolierplatte (1) nach einem der Ansprüche 1 bis 3, **dadurch gekennzeichnet, dass** das Polymer mindestens eine negativ geladene funktionelle Gruppe umfasst.

5. Vakuumisolierplatte (1) nach einem der Ansprüche 1 bis 3, **dadurch gekennzeichnet, dass** das Polymer mindestens eine positiv geladene funktionelle Gruppe umfasst.

6. Vakuumisolierplatte (1) nach einem der Ansprüche 4 oder 5, **dadurch gekennzeichnet, dass** das Polymer ein Triblock-Polymer ist, das eine Hydroxyl (OH⁻) funktionelle Gruppe mit hydrophoben und hydrophilen Blöcken umfasst, von denen die wässrige Lösung die Eigenschaft hat, Micellen zu bilden.

7. Vakuumisolierplatte (1) nach einem der Ansprüche 4 oder 5, **dadurch gekennzeichnet, dass** das Polymer ein Pentablock-Polymer ist, das eine Sulfon (S0₃⁻) funktionelle Gruppe mit hydrophoben und hydrophilen Blöcken umfasst, von denen die wässrige Lösung die Eigenschaft hat, Micellen zu bilden.

8. Vakuumisolierplatte (1) nach einem der Ansprüche 4 oder 5, **dadurch gekennzeichnet, dass** das Polymer ein Pentablock-Polymer ist, das eine Carboxyl (COOH⁻) funktionelle Gruppe mit hydrophoben und hydrophilen Blöcken umfasst, von denen die wässrige Lösung die Eigenschaft hat, Micellen zu bilden.

9. Vakuumisolierplatte (1) nach einem der vorstehenden Ansprüche, **dadurch gekennzeichnet, dass** die anorganischen Materialien anorganische Materialien auf Silikatbasis sind.

10. Vakuumisolierplatte (1) nach Anspruch 9, **dadurch gekennzeichnet, dass** die anorganischen Materialien Aluminiumsiliziumdioxid, Natriumsiliziumdioxid, gefällte Silikate, pyrogene Silikate oder eine Mischung aus all diesen Materialien sind.

## Revendications

1. Panneau d'isolation sous vide (1) comprenant un matériau de noyau poreux (2), un getter (3) approprié pour la structure chimique du matériau de noyau (2) et une barrière (4) maintenant le matériau de noyau (2) et le getter (3) ensemble,
**caractérisé en ce que** le matériau de noyau poreux ouvert (2) est obtenu par:
- l'addition de matières inorganiques dans la solution aqueuse d'un polymère comprenant des blocs hydrophiles et hydrophobes, dont la solution aqueuse a la caractéristique de former des micelles,
- revêtir le polymère sur la matière inorganique ajoutée en formant des structures micellaires,
- enlever le polymère de la surface du matériau inorganique après le revêtement,
en outre **caractérisé en ce que** le panneau d'isolation sous vide est obtenu en aspirant et en fermant le panneau d'isolation sous vide d'une manière étanche.

2. Panneau d'isolation sous vide (1) selon la revendication 1, **caractérisé en ce que** le rapport en poids du polymère au matériau inorganique est compris entre 5% et 50%.

3. Panneau d'isolation sous vide (1) selon la revendication 1 ou 2, **caractérisé en ce que** la température de la solution est comprise entre 2°C et 30°C après l'addition du matériau inorganique à la solution aqueuse du polymère.

4. Panneau d'isolation sous vide (1) selon l'une quelconque des revendications 1 à 3, **caractérisé par** le polymère comprend au moins un groupe fonctionnel chargé négativement.

5. Panneau d'isolation sous vide (1) selon l'une quelconque des revendications 1 à 3, **caractérisé par** le polymère comprenant au moins un groupe fonctionnel chargé positivement.

6. Panneau d'isolation sous vide (1) selon l'une quelconque des revendications 4 ou 5, **caractérisé en ce que** le polymère est un polymère tribloc comprenant un groupe fonctionnel hydroxyle (OH⁻) ayant des blocs hydrophobes et hydrophiles, dont la solution aqueuse a la caractéristique de former des micelles.

7. Panneau d'isolation sous vide (1) selon l'une quelconque des revendications 4 ou 5, **caractérisé en ce que** le polymère est un polymère pentabloc comprenant un groupe fonctionnel de sulfo (S0₃⁻) ayant des blocs hydrophobes et hydrophiles, dont la solution aqueuse a la caractéristique de former des micelles.

8. Panneau d'isolation sous vide (1) selon l'une quelconque des revendications 4 ou 5, **caractérisé en ce que** le polymère est un polymère pentabloc comprenant un groupe fonctionnel de carboxyle (COOH⁻) ayant des blocs hydrophobes et hydrophiles, dont la solution aqueuse a la caractéristique de former des micelles.

9. Panneau d'isolation sous vide (1) selon l'une quelconque des revendications précédents, **caractérisé en ce que** les matériaux inorganiques sont des matériaux inorganiques à base de silice.

10. Panneau d'isolation sous vide (1) selon la revendication 9, **caractérisé en ce que** les matériaux inorganiques sont la silice d'aluminium, la silice de sodium, la silice précipitée, la silice fumée ou un mélange de tous ces matériaux.
